# EUROPÄISCHE PATENTSCHRIFT

(11) **EP 2 724 895 B1**
(45) Veröffentlichungstag und Bekanntmachung des Hinweises auf die Patenterteilung: **08.10.2014**
(21) Anmeldenummer: 13189097.2
(22) Anmeldetag: 17.10.2013
(51) Int. Cl.: B60R 19/18, B60R 19/34

(54) **Stoßfängerquerträgerbaugruppe**
Bumper cross member assembly
Module de support transversal de pare-chocs

(30) Priorität: 26.10.2012 DE 202012104117 U
(43) Veröffentlichungstag der Anmeldung: 30.04.2014
(73) Patentinhaber: Kirchhoff Automotive Deutschland GmbH, 57439 Attendorn (DE)
(72) Erfinder: Lenkenhoff, Christian, 58332 Schwelm (DE); Töller, Marco, 51107 Köln (DE)
(74) Vertreter: Haverkamp, Jens

(56) Entgegenhaltungen:
- DE-A1-102006 002 871
- DE-U1-202011 051 008

## Beschreibung

Die Erfindung betrifft eine Stoßfängerquerträgerbaugruppe, umfassend einen Stoßfängerquerträger mit zumindest einem Anschlussabschnitt zum Anschließen jeweils eines Energieabsorptionsbauteils und umfassend zumindest ein an den Anschlussabschnitt angeschlossenes Energieabsorptionsbauteil, wobei der zumindest eine Anschlussabschnitt zwei in Richtung zu dem Energieabsorptionsbauteil hin abgestellte Schenkel als Einfassung für den an den Stoßfängerquerträger anzuschließenden Endabschnitt des Energieabsorptionsbauteils aufweist, an welchen Schenkeln das Energieabsorptionsbauteil mit seiner Außenseite anliegt und an welche Schenkel das Energieabsorptionsbauteil angeschlossen ist, wobei die zu dem Stoßfängerquerträger weisende Profilkopffläche des Energieabsorptionsbauteils eben ist und wobei zwischen den die Einfassung für das Energieabsorptionsbauteil bildenden Schenkeln und einer in dem zumindest einen Anschlussabschnitt des Stoßfängerquerträgers angeordneten, benachbarten Anlageplatte, an der die Profilkopffläche des Energieabsorptionsbauteils anliegt, eine Aussparung vorgesehen ist, die sich über die Breite der Anlageplatte und mit einem Abschnitt um die die Breite begrenzende Eckausführungen der Anlageplatte erstreckt. Ferner betrifft die Erfindung ein Verfahren zum Herstellen einer solchen Stoßfängerquerträgerbaugruppe.

Zum Absorbieren von kinetischer Energie, die auf den Stoßfänger eines Fahrzeuges im Falle eines Unfalles wirken, werden Energieabsorptionsbauteile - sogenannte Crashboxen - zwischen dem Stoßfänger und dem Chassis eines Fahrzeuges angeordnet. Ein solches Energieabsorptionsbauteil umfasst ein Energieabsorptionsprofil, von dem die Aufprallenergie absorbiert wird. Bei einem solchen Energieabsorptionsprofil handelt es sich typischerweise um ein Metallprofil. Eingesetzt werden beispielsweise stranggepresste, kastenförmige, auch mehrkammerig ausgeführte Extrusionsprofile aus einer entsprechend geeigneten Aluminiumlegierung. Im Falle einer Energieabsorption werden diese Energieabsorptionsprofile in Richtung ihrer Längsachse ziehharmonikaähnlich bzw. nach Art eines Balges zusammengefaltet, durch welchen Umformprozess die Aufprallenergie absorbiert wird.

Zum Anordnen eines solchen Energieabsorptionsprofils zwischen dem Chassis des Fahrzeuges und dem Stoßfänger umfasst das Energieabsorptionsbauteil neben dem eigentlichen Energieabsorptionsprofil Mittel zum Anschließen des einen Endes desselben an das Chassis und an dem anderen Ende zum Anschließen desselben an einen Stoßfängerquerträger. Zum Anschließen des Energieabsorptionsprofils an ein Chassis dient eine typischerweise mit dem Energieabsorptionsprofil verschweißte Montageplatte, die beim Anschließen des Energieabsorptionsbauteils an das Chassis mit dessen Fahrzeuglängsträger verschraubt wird. Ein Anschluss des Energieabsorptionsbauteils an den Stoßfängerquerträger erfolgt bevorzugt über Schraubverbindungen, wenn das Energieabsorptionsprofil materialunterschiedlich zu dem Material des Stoßfängerquerträgers ist. Zum Anschließen der Energieabsorptionsbauteile an einen Stoßfängerquerträger verfügt letzterer über entsprechende Anschlussabschnitte. Diese umfassen zwei sich in y-Richtung erstreckende, zum Energieabsorptionsbauteil hin abgestellte Schenkel. Diese in z-Richtung übereinander liegende und voneinander beabstandete Schenkel bilden eine Einfassung, in die das Energieabsorptionsprofil mit einem Endabschnitt einpasst. Angeschlossen wird typischerweise ein solches Energieabsorptionsbauteil an den Stoßfängerquerträger mittels Schraubverbindungen, wobei die Befestigungsschrauben entsprechende Befestigungsöffnungen in den Schenkeln durchgreifen und in wenigstens einer der äußeren Wände des Energieabsorptionsprofils festgesetzt sind oder miteinander fluchtende Befestigungsöffnungen in beiden einander gegenüberliegenden Wänden durchgreifen und sodann, gegen die Schenkel wirkend, den Endabschnitt des Energieabsorptionsprofils einspannen.

Bei Stoßfängersystemen, bei denen ein abgelängtes Energieabsorptionsprofil als Energieabsorptionselement mit einem Stoßfängerquerträger in schalenbauweise verbunden werden soll, ist eine vollflächige Anlage der Profilkopffläche des Energieabsorptionsbauteils an der Rückseite des Stoßfängerquerträgers nicht oder nur mit einem unverhältnismäßig großen Herstellungsaufwand möglich. Bedingt ist dieses durch die in Richtung zu dem Energieabsorptionsbauteil abgestellten Schenkel, die die Einfassung des diesseitigen Endes des Energieabsorptionsbauteils bilden, da diese an der Außenseite des Energieabsorptionsbauteils und den beim Abstellen notwendigerweise sich einstellenden Radien zur Anlage kommen müssen. Entsprechend beansprucht sind im Crashfalle die zur Verbindung des Stoßfängerquerträgers mit den Energieabsorptionsbauteilen eingesetzten Schrauben bzw. Schraubverbindungen.

Eine Stoßfängerquerträgerbaugruppe gemäß dem Oberbegriff des Anspruchs 1 ist aus DE 20 2011 051 008 U1 bekannt. Bei dieser Stoßfängerquerbaugruppe verfügt der Stoßfängerquerträger über eine durch zwei in vertikaler Richtung voneinander beabstandete Schenkel gebildete Einfassung, in welches das Energieabsorptionsbauteil eingesetzt ist. Im Übergang von den Schenkeln in den die Schenkel verbindenden Abschnitt ist eine Anlageplatte ausgebildet. Das Energieabsorptionsbauteil greift mit der Stirnfläche seiner oberen und unteren Seitenfläche durch jeweils eine Aussparung hindurch. Die Aussparungen sind als langlochartige Ausklinkungen ausgeführt, die sich über die gesamte Krümmung zwischen jedem die Einfassung bildenden Schenkel und dem diesen verbindenden Abschnitt erstrecken.

Ausgehend von diesem diskutierten Stand der Technik liegt der Erfindung daher die Aufgabe zu Grunde, eine eingangs genannte Stoßfängerquerträgerbaugruppe dergestalt weiterzubilden, dass mit einfachen Mitteln und ohne Einsatz zusätzlicher Bauteile und ohne zusätzliche Prozessschritte die Krafteinleitung in die an einen Stoßfängerquerträger angeschlossenen Energieabsorptionsbauteile im Crashfalle verbessert ist.

Gelöst wird diese Aufgabe erfindungsgemäß durch eine eingangs genannte, gattungsgemäße Stoßfängerquerträgerbaugruppe gemäß Anspruch 1 und durch ein Verfahren zum Herstellen eine Stoßfängerquerträgerbaugruppe gemäß Anspruch 7.

Bei den im Rahmen dieser Ausführungen benutzten Richtungsbezeichnungen (x, y und z) handelt es sich um die üblichen, bei einem Fahrzeug eingesetzten Koordinaten, wobei x die Längserstreckung des Fahrzeuges, y die Quererstreckung und z die Hochachse darstellen.

Bei dieser Stoßfängerquerträgerbaugruppe verfügt der Stoßfängerquerträger über besonders gestaltete Anschlussabschnitte. Diese verfügen über eine die Profilkopffläche des Energieabsorptionsbauteils bedeckende Anlageplatte, an der die zu dem Stoßfängerquerträger weisende Profilkopffläche des Energieabsorptionsbauteils anliegt. Zwischen der Anlageplatte und den benachbart angeordneten und in Richtung zu dem Energieabsorptionsbauteil abgestellten, als Anbindungsflansche dienenden Schenkeln befindet sich eine Aussparung, die sich auch um die die Breite der den oberen bzw. unteren Abschluss der Anlageplatte begrenzenden Ecken bzw. Eckausbildungen herum erstreckt. Durch diese Aussparungen ist die Anlageplatte im Bereich ihres oberen bzw. unteren Endbereiches von den in Querrichtung (y-Richtung) angrenzenden Bereichen des Stoßfängerquerträgers entkoppelt. Dieses wird genutzt, damit die die Energieabsorptionsprofileinfassung bildenden abgestellten Schenkel des Stoßfängerquerträgers soweit abgestellt werden können, dass deren zu dem Energieabsorptionsbauteil weisende Flächen sich in derselben Höhe, bezogen auf die z-Erstreckung des Stoßfängerquerträgers befinden können, wie der obere bzw. untere Abschluss der Anlageplatte. Möglich ist es bei dieser Ausgestaltung auch, die vorgenannten Flächen der abgestellten Schenkel gegenüber der z-Erstreckung der Anlageplatte zurückversetzt anzuordnen, mithin den Abstand dieser zueinander weisenden Flächen der abgestellten Schenkel zueinander kleiner oder gleich zu wählen als die z-Erstreckung der Anlageplatte. Auf diese Weise ist eine vollflächige Anlage der Profilkopffläche des Energieabsorptionsprofils des Energieabsorptionsbauteils auf der Anlageplatte möglich, obwohl die Energieabsorptionsprofileinfassung bildenden Schenkel an der Außenseite des Energieabsorptionsprofils anliegen. Infolge der vollflächigen Anlage der Profilkopffläche des Energieabsorptionsbauteils an der Anlageplatte des Stoßfängerquerträgers ist eine direkte Krafteinleitung von dem Stoßfängerquerträger in das Energieabsorptionsbauteil gegeben. Das vorbeschriebene Konzept ermöglicht es auch, die Energieabsorptionsbauteile mit einem Anschlussabschnitt des Stoßfängerquerträgers zu verkleben, und zwar mit einer Klebeschicht zwischen den zu der Außenseite des Energieabsorptionsbauteils weisende Flächen der gekanteten Schenkel und den zu diesen weisenden Außenseiten des Energieabsorptionsbauteils.

Das vorbeschriebene Konzept eignet sich auch zum Realisieren von Stoßfängerquerträgerbaugruppen, bei denen die Stirnfläche der Energieabsorptionsbauteile winklig zu der Aufprallfläche eines Hindernisses gemäß dem AZT-Strukturtest, also in einem Winkel von 10° zur y-z-Ebene um die x-Achse oder in Richtung der y-z-Achse (AZT: Allianz Zentrum für Technik) gelegen ist.

Typischerweise wird es sich bei dem Stoßfängerquerträger um ein umgeformtes Blechbauteil handeln, beispielsweise umgeformt durch einen Tiefziehprozess. Auch ein Rollformen derartiger Stoßfängerquerträger ist möglich. Zum Ausbilden der vorbeschriebenen besonderen Anschlussabschnitte ist bei einer Ausgestaltung, bei der der Stoßfängerquerträger ein solches umgeformtes Stahlblechbauteil ist vorgesehen, dass vor dem Vorgang des Umformens ein Einschnitt oder ein Schlitz in die Blechplatine eingebracht wird, und zwar an denjenigen Stellen, an denen nach dem Umformvorgang die Aussparungen liegen sollen. Insofern ist dieser durch den Einschnitt oder den Schlitz bereits in der Blechplatine kenntlich gemachte obere und untere Endbereich der Anlageplatte von den benachbarten Platinenbereichen für den Vorgang der Umformung entkoppelt.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht einer Stoßfängerquerträgerbaugruppe,
- **Fig. 2:**: einen schematisierten Längsschnitt durch die Stoßfängerquerträgerbaugruppe im Bereich eines Anschlussabschnittes des Stoßfängerquerträgers und
- **Fig. 3:**: die Schnittdarstellung der Figur 2 mit einem an den gezeigten Anschlussabschnitt angeschlossenen Energieabsorptionsbauteil.

Eine Stoßfängerquerträgerbaugruppe 1 umfasst einen Stoßfängerquerträger 2 und zwei daran angeschlossene Energieabsorptionsbauteile 3, 3.1, so genannte Crash-Boxen. Der Stoßfängerquerträger 2 ist im Wesentlichen U-förmig profiliert. Bei dem Stoßfängerquerträger 2 handelt es sich um ein im Wege eines Tiefziehprozesses hergestelltes Stahlblechbauteil. Zur Versteifung trägt der Stoßfängerquerträger zwei an die U-förmige Querschnittsform in z-Richtung angeformte Schenkel 4, 4.1.

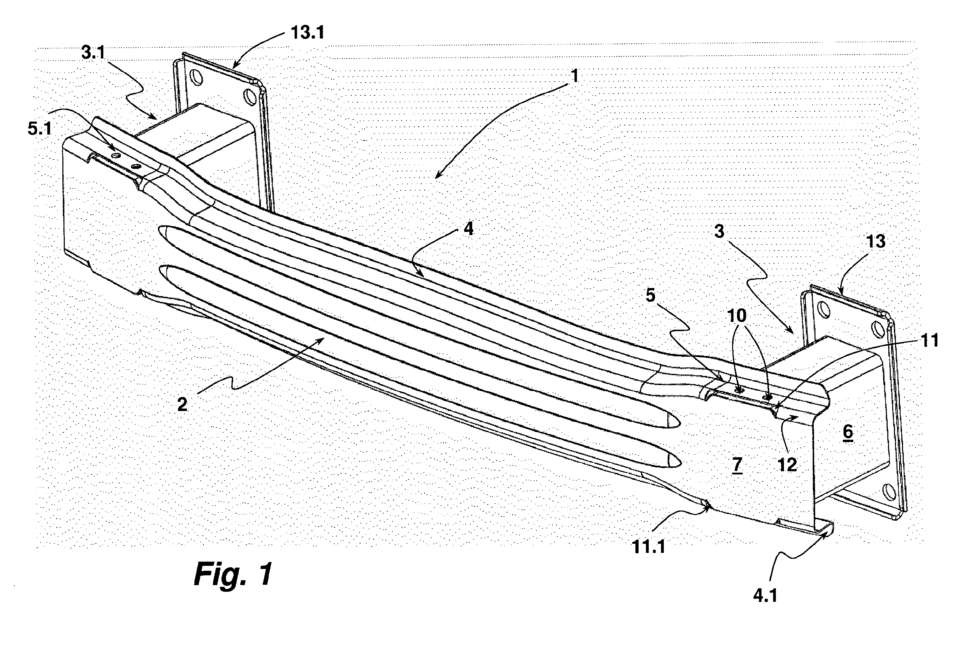

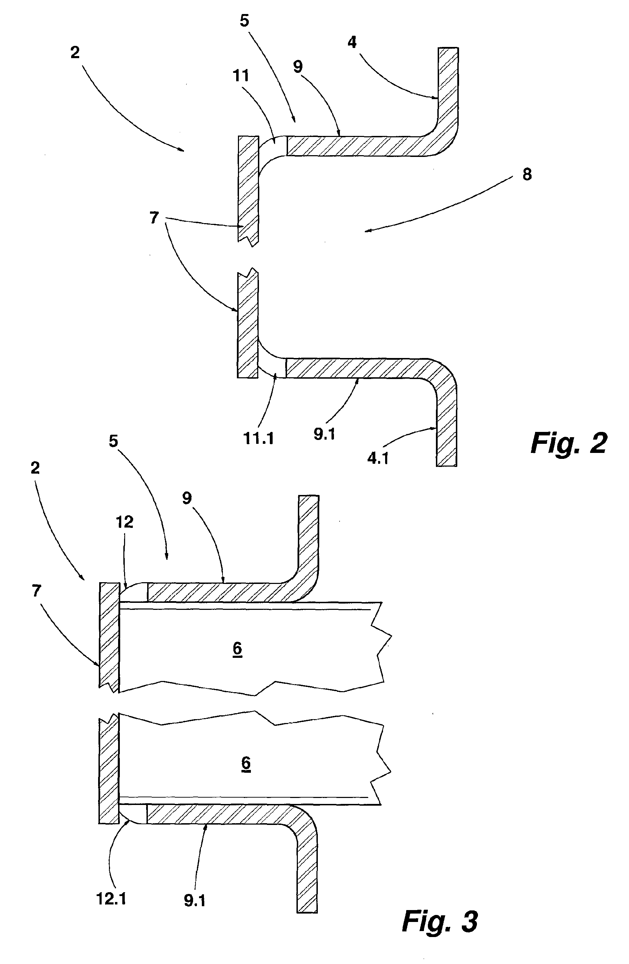

Der Stoßfängerquerträger 2 umfasst zwei Anschlussabschnitte 5, 5.1, an die jeweils ein Energieabsorptionsbauteil 3 bzw. 3.1 angeschlossen ist. Im Folgenden ist der Anschlussabschnitt 5 beschrieben. Dieselben Ausführungen gelten gleichermaßen für den Anschlussabschnitt 5.1. Der Anschlussabschnitt 5 des Stoßfängerquerträgers 2 bildet denjenigen Abschnitt, an den das Energieabsorptionsbauteil 3 mit der Profilkopffläche seines Energieabsorptionsprofils 6 angrenzend gehalten ist. Der Anschlussabschnitt 5 umfasst eine Anlageplatte 7, von der in Figur 1 die Rückseite erkennbar ist. Die Konzeption des Anschlussabschnittes 5 des Stoßfängerquerträgers 2 ist deutlicher aus der Querschnittdarstellung der Figur 2 erkennbar. Aus dieser Darstellung wird deutlich, dass die Anlageplatte 7 eben ist, vor allem an ihrer zu dem Energieabsorptionsprofil 6 weisenden Seite. Die Anlageplatte 7 bildet die Basis einer Energieabsorptionsbauteilaufnahme 8, die in z-Richtung nach oben durch einen ersten, aus der Ebene des Stoßfängerquerträgers abgestellten Schenkel 9 und einen zweiten, unteren aus der Ebene des Stoßfängerquerträgers 2 abgestellten Schenkel 9.1 begrenzt ist. Die Schenkel 9, 9.1 sind Teile der Seitenschenkel der U-förmigen Profilierung des Stoßfängerquerträgers 2. Der Abstand der beiden zueinander weisenden Seiten der Schenkel 9, 9.1 zueinander entspricht der Höhe des Energieabsorptionsprofils 6 des Energieabsorptionsbauteils 3. Eingebracht in die Schenkel 9, 9.1 sind Befestigungsbohrungen 10, durch die Befestigungsschrauben zum Anschließen des Energieabsorptionsbauteils 3 an den Anschlussabschnitt 5 des Stoßfängerquerträgers 2 hindurchgreifen (nicht dargestellt). Bereits aus der perspektivischen Ansicht des Anschlussabschnittes 5 der Figur 1 wird deutlich, dass die z-Erstreckung der Anlageplatte 7 größer ist als der Abstand der beiden zueinander weisenden Seiten der Schenkel 9, 9.1. Zwischen dem oberen und unteren Endbereich der Anlageplatte 7 ist jeweils eine Aussparung 11, 11.1 vorgesehen, durch die die Endbereiche der Anlageplatte 7 von den in y-Richtung benachbarten und durch den Umformprozess gebogenen Abschnitten des Stoßfängerquerträgers 2 entkoppelt sind. Insofern ist bezüglich der Nutzhöhe der Energieabsorptionsbauteilaufnahme 8 diese in der vollen, zwischen den Schenkeln 9, 9.1 befindlichen Höhe in ihrer gesamten Tiefe nutzbar, vor allem auch am Profilkopfende des Energieabsorptionsprofils 6, welches an der zu der Aufnahme 8 weisenden Seite der Anlageplatte 7 zur Anlage gebracht wird.

Die Aussparungen 11, 11.1 erstrecken sich entlang des oberen bzw. unteren Randes der Anlageplatte 7 und sind über die den oberen und unteren Abschluss der Anlageplatte 7 in y-Richtung begrenzenden Kanten herumgeführt. Eingebracht worden sind die Aussparungen 11, 11.1 in das Stahlblechbauteil bereits vor dem Umformvorgang. Vor dem Umformvorgang sind an denjenigen Positionen, an denen die Aussparungen 11, 11.1 in dem umgeformten Stoßfängerquerträger 2 angeordnet sein sollen, Schnitte bzw. Schlitze in der entsprechenden Geometrie eingebracht worden. Anschließend ist dieser präparierte Stahlblechrohling in einem Umformwerkzeug umgeformt worden. Aufgrund der durch die Einschnitte von den in y-Richtung benachbarten Bereichen ist die Anlageplatte 7 von der Umformung, die zur Ausbildung der die Schenkel 9, 9.1 tragenden Radien (Biegeabschnitt 12, 12.1) geführt hat, entkoppelt.

Figur 3 zeigt die Querschnittsdarstellung des Anschlussabschnittes 5 der Figur 2 mit dem darin eingesetzten Energieabsorptionsprofil 6 des Energieabsorptionsbauteils 3. Bei dem Energieabsorptionsprofil 6 des dargestellten Ausführungsbeispiels handelt es sich um ein stranggepresstes mehrkammeriges Kastenprofil aus einem Aluminiumwerkstoff. Auch andere Leichtmetallwerkstoffe sind denkbar, ebenso wie der Einsatz eines Energieabsorptionsprofils aus einem Stahlwerkstoff. Die zu dem Stoßfängerquerträger 2 bzw. seiner Anlageplatte 7 weisende Profilkopffläche ist eben, so dass die gesamte Profilkopfquerschnittsfläche als Anlagefläche an der Anlageplatte 7 genutzt werden kann. Wie aus Figur 3 erkennbar, liegt die Profilkopffläche des Energieabsorptionsprofils 6 insgesamt und flächig auf der zu dem Energieabsorptionsprofil 6 weisenden Seite der Anlageplatte 7 an. Die Anlageplatte 7 bedeckt, damit die Profilkopffläche insgesamt, was ebenfalls zum Vorteil hat, dass in die Kammern des Energieabsorptionsprofils 6 keine Verunreinigungen eindringen können. Fixiert ist das Energieabsorptionsprofil 6 innerhalb der Aufnahme 8 durch die Befestigungsbohrungen 10 durchgreifende und in die äußeren Wände des Energieabsorptionsprofils 6 eingreifende Schrauben (nicht dargestellt). Hierbei kann es sich um selbstfurchende Schrauben handeln, die mit ihrem selbstfurchenden Gewinde in den an die Schenkel 9 bzw. 9.1 angrenzenden Wänden des Energieabsorptionsprofils festgesetzt sind. Ebenfalls ist es möglich, ein oder mehrere, das Energieabsorptionsprofil in Querrichtung durchgreifende Schrauben zu verwenden, so dass dieses zwischen den beiden Schenkeln des Stoßfängerquerträgers verspannt ist. Möglich ist es auch, an dieser Stelle stoff- oder kraftschlüssige Verbindungen einzusetzen, beispielsweise durch Schweißen oder Kleben.

Wie aus Figur 3 erkennbar, ist das Energieabsorptionsprofil 6 des Energieabsorptionsbauteils 3 in der Aufnahme 8 gehalten. Dieses erfolgt dadurch, dass das Energieabsorptionsprofil 6 mit seiner Profilkopffläche sich auf der Anlageplatte 7 abstützt. Somit dienen die zum Anschließen des Energieabsorptionsbauteils 3 an den Stoßfängerquerträger 2 eingesetzten Schrauben letztendlich einer Fixierung in x-Richtung und in y-Richtung. Möglich ist es auch, dass das Energieabsorptionsprofil 6 an den Stirnseiten der Biegeabschnitte 12, 12.1 anliegt, wodurch das Energieabsorptionsprofil 6 in y-Richtung formschlüssig in der Aufnahme 8 aufgenommen ist.

Infolge der vollflächigen Anlage der Profilkopffläche des Energieabsorptionsprofils 6 an der Anlageplatte 7 wird im Falle eines Aufpralles die zu absorbierende Energie gleichmäßig in das Energieabsorptionsprofil 6 und damit in das Energieabsorptionsbauteil 3 eingeleitet. Durch die bereits vorbeschriebene Fixierung des Energieabsorptionsprofils 6 in der Aufnahme sind die eingesetzten Befestigungsschrauben in x-Richtung bei axialer Druckbelastung nur relativ geringen Kräften ausgesetzt.

Wenn das Energieabsorptionsprofil mit dem Anschlussabschnitt des Stoßfängerquerträgers verschweißbar ist, beispielsweise wenn das Energieabsorptionsprofil und der Stoßfängerquerträger beide aus Stahl gefertigt sind, und ein Anschluss des Energieabsorptionsprofils an den Anschlussabschnitt des Stoßfängerquerträgers durch Schweißen erfolgen soll, kann eine Schweißung, wie bereits vorstehend aufgezeigt, zwischen den Schenkeln des Anschlussabschnittes des Stoßfängerquerträgers und den daran angrenzenden Wandabschnitten des Energieabsorptionsprofils erfolgen. Anstelle oder auch ergänzend zu einer Schweißung an dieser Stelle kann dass Energieabsorptionsprofil auch innerhalb des Anschlussabschnittes des Stoßfängerquerträgers mit diesem verschweißt werden. Eine Schweißverbindungen zwischen dem Energieabsorptionsprofil und dem Anschlussabschnitt des Stoßfängerquerträgers kann in besonderer Weise auch durch Ausnutzen der die Anlageplatte grenzenden Aussparungen erfolgen, da ein Schweißen in diesen Aussparungen möglich ist. Bei einer solchen Ausgestaltung wird die Profilkopffläche des Energieabsorptionsprofils mit der Anlageplatte verschweißt. Von besonderem Vorteil ist, dass durch die Aussparung nicht nur eine Zugänglichkeit zu diesem Rand der Profilkopffläche des Energieabsorptionsprofils bereitgestellt ist, sondern dass hierdurch auch eine Aufnahme für eine Schweißzugabe bereitgestellt ist. In Bezug auf die zu der Anlageplatte weisenden Stöße der Schenkel kann eine besonders widerstandsfähige Verschweißung mittels einer Überlappschweißnaht mit den daran anliegenden Wand des Energieabsorptionsprofils vorgenommen werden.

Zum Anschließen der Stoßfängerquerträgerbaugruppe 1 an das Chassis eines Fahrzeuges tragen die Energieabsorptionsbauteile 3, 3.1 jeweils an ihrer dem Stoßfängerquerträger 2 gegenüberliegenden Ende eine Montageplatte 13, 13.1. Diese werden mit dem Chassis des Fahrzeuges verschraubt, typischerweise mit einem Längsträger.

### Bezugszeichenliste

- 1: Stoßfängerquerträgerbaugruppe
- 2: Stoßfängerquerträger
- 3, 3.1: Energieabsorptionsbauteil
- 4, 4.1: Schenkel
- 5, 5.1: Anschlussabschnitt
- 6: Energieabsorptionsprofil
- 7: Anlageplatte
- 8: Energieabsorptionsbauteilaufnahme
- 9, 9.1: Schenkel
- 10: Befestigungsbohrung
- 11, 11.1: Aussparung
- 12, 12.1: Biegeabschnitt
- 13, 13.1: Montageplatte

## Patentansprüche

1. Stoßfängerquerträgerbaugruppe, umfassend einen Stoßfängerquerträger (2) mit zumindest einem Anschlussabschnitt (5, 5.1) zum Anschließen jeweils eines Energieabsorptionsbauteils (3, 3.1) und umfassend zumindest ein an den Anschlussabschnitt (5, 5.1) angeschlossenes Energieabsorptionsbauteil (3, 3.1), wobei der zumindest eine Anschlussabschnitt (5, 5.1) zwei in Richtung zu dem Energieabsorptionsbauteil (3, 3.1) hin abgestellte Schenkel (9, 9.1) als Einfassung für den an den Stoßfängerquerträger (2) anzuschließenden Endabschnitt des Energieabsorptionsbauteils (3, 3.1) aufweist, an welchen Schenkeln (9, 9.1) das Energieabsorptionsbauteil (3, 3.1) mit seiner Außenseite anliegt und an welche Schenkel (9, 9.1) das Energieabsorptionsbauteil (3, 3.1) angeschlossen ist, wobei die zu dem Stoßfängerquerträger (2) weisende Profilkopffläche des Energieabsorptionsbauteils (3, 3.1) eben ist und wobei zwischen den die Einfassung für das Energieabsorptionsbauteil (3, 3.1) bildenden Schenkeln (9, 9.1) und einer in dem zumindest einen Anschlussabschnitt (5, 5.1) des Stoßfängerquerträgers (2) angeordneten, benachbarten Anlageplatte (7), an der die Profilkopffläche des Energieabsorptionsbauteils (3, 3.1) anliegt, eine Aussparung (11, 11.1) vorgesehen ist, die sich über die Breite der Anlageplatte (7) und mit einem Abschnitt um die die Breite begrenzende Eckausführungen der Anlageplatte (7) erstreckt, **dadurch gekennzeichnet, dass** der Abstand der zur Anlage an das Energieabsorptionsbauteil (3, 3.1) gelangenden Flächen der die Energieabsorptionsbauteilaufnahme (8) bildenden Einfassung des Stoßfängerquerträgers (2) voneinander kleiner oder gleich der Erstreckung der Anlageplatte (7) in z-Richtung (Vertikalrichtung) ist und somit die Profilkopffläche des Energieabsorptionsbauteils (3, 3.1) vollflächig von der Anlageplatte (7) bedeckt ist.

2. Stoßfängerquerträgerbaugruppe nach Anspruch 1 , **dadurch gekennzeichnet, dass** der obere und untere Abschluss der Anlageplatte (7) des Stoßfängerquerträgers (2) mit der von dem in der Aufnahme (8) gehaltenen Energieabsorptionsbauteil (3, 3.1) wegweisenden Oberseite mit den nach außen weisenden Flächen der Schenkel (9, 9.1) fluchten oder im wesentlichen fluchten.

3. Stoßfängerquerträgerbaugruppe nach Anspruch 1 oder 2, **dadurch gekennzeichnet, dass** der Stoßfängerquerträger (2) ein tiefgezogenes Stahlblechteil ist, in das vor dem Vorgang des Tiefziehens zum Ausbilden der Aussparungen (11, 11.1) in dem zumindest einen Anschlussabschnitt (5, 5.1) in den die Aussparungen (11, 11.1) nach dem Umformvorgang bildenden Bereichen jeweils ein Einschnitt oder ein Schlitz eingebracht ist.

4. Stoßfängerquerträgerbaugruppe nach einem der Ansprüche 1 bis 3, **dadurch gekennzeichnet, dass** der Stoßfängerquerträger (2) zwei Anschlussabschnitte (5, 5.1) aufweist, an denen jeweils ein Energieabsorptionsbauteil (3, 3.1) angeschlossen ist.

5. Stoßfängerquerträgerbaugruppe nach einem der Ansprüche 1 bis 4, **dadurch gekennzeichnet, dass** das Energieabsorptionsbauteil (3, 3.1) mechanisch an die Schenkel (9, 9.1) des Anschlussabschnittes (5, 5.1) des Stoßfängerquerträgers (2) angeschlossen ist.

6. Stoßfängerquerträgerbaugruppe nach einem der Ansprüche 1 bis 4, **dadurch gekennzeichnet, dass** das Energieabsorptionsbauteil (3, 3.1) kraftschlüssig oder durch eine Schweißung an den Anschlussabschnitt (5, 5.1) des Stoßfängerquerträgers (2) angeschlossen ist.

7. Verfahren zum Herstellen einer Stoßfängerquerträgerbaugruppe nach einem der Ansprüche 1 bis 6, **dadurch gekennzeichnet, dass** der Stoßfängerquerträger (2) aus einem Blechbauteil in seine profilierte Form umgeformt wird, wobei vor dem Vorgang des Umformens ein Einschnitt oder ein Schlitz in die Blechplatine an denjenigen Stellen eingebracht wird, an denen nach dem Umformvorgang die Aussparungen (11, 11.1) liegen sollen, wodurch der obere und untere Endbereich der Anlageplatte (7) von den benachbarten Platinenbereichen für den Vorgang der Umformung entkoppelt wird.

## Claims

1. Bumper cross-member assembly, comprising a bumper cross-member (2) with at least one connecting section (5, 5.1) for connecting in each case one energy-absorption component (3, 3.1) and comprising at least one energy-absorption component (3, 3.1) connected to the connecting section (5, 5.1), wherein the at least one connecting section (5, 5.1) has two branches (9, 9.1) set downwards in the direction of the energy-absorption component (3, 3.1) as a bezel for the end section of the energy-absorption component (3, 3.1) to be connected to the bumper cross-member (2), against which branches (9, 9.1) the energy-absorption component (3, 3.1) lie and to which branches (9, 9.1) the energy-absorption component (3, 3.1) is connected, wherein the profile head surface of the energy-absorption component (3, 3.1) oriented in the direction of the bumper cross-member (2) is level and wherein between the branches (9, 9.1) forming the bezel for the energy-absorption component (3, 3.1) and an installation plate (7) arranged adjacent to at least one connecting section (5, 5.1) of the bumper cross-member (2), wherein the profiled upper surface of the energy-absorption component (3, 3.1) lies against said installation plate, a recess (11, 11.1) is provided, which extends over the width of the installation plate (7) and with one section around the width-delimiting corner embodiments of the installation plate (7), **characterised in that** the distance between the surfaces of the bezel of the bumper cross-member (2) which come to lie against the energy-absorbing component (3, 3.1), wherein said bezel forms the energy-absorption component holder (8), is the same or smaller than the extension of the installation plate (7) in the z direction and thus the profiled upper surface of the energy-absorption component (3, 3.1) is covered over its entire area by the installation plate (7).

2. Bumper cross-member assembly according to claim 1, **characterised in that** the top and bottom end of the installation plate (7) of the bumper cross-member (2) are aligned or substantially aligned with the top side facing away from the energy-absorption component (3, 3.1) held in the holder (8), with the surfaces of the branches (9, 9.1) pointing outwards.

3. Bumper cross-member assembly according to claim 1 or 2, **characterised in that** the bumper cross-member (2) is a deep-drawn steel plate part, into which before the deep-drawing procedure for forming the recesses (11, 11.1) in the at least one connecting section (5, 5.1) in the areas forming the recesses (11, 11.1) after the reshaping procedure, in each case one notch or one slot is introduced.

4. Bumper cross-member assembly according to any one of claims 1 to 3, **characterised in that** the bumper cross-member (2) has two connecting sections (5, 5.1) to which in each case one energy-absorption component (3, 3.1) is connected.

5. Bumper cross-member assembly according to any one of claims 1 to 4, **characterised in that** the energy-absorption component (3, 3.1) is mechanically connected to the branch (9, 9.1) of the connecting section (5, 5.1) of the bumper cross-member (2).

6. Bumper cross-member assembly according to any one of claims 1 to 4, **characterised in that** the energy-absorption component (3, 3.1) is connected in a force-fitting manner or by a weld to the connecting section (5, 5.1) of the bumper cross-member (2).

7. Method for the manufacture of a bumper cross-member assembly according to any one of claims 1 to 6, **characterised in that** the bumper cross-member (2) is reshaped from a sheet component into its profiled form, wherein before the reshaping procedure, a notch or a slot is made in the metal plate at the places at which, after the reshaping procedure, the recesses (11, 11.1) are to be located, wherein the top and bottom end region of the installation plate (7) is disconnected from the adjacent plate areas for the reshaping procedure.

## Revendications

1. Module de support transversal de pare-chocs comprenant un support transversal de pare-chocs (2) avec au moins un tronçon de raccordement (5, 5.1) afin de raccorder respectivement une pièce d'absorption d'énergie (3, 3.1) et comprenant au moins une pièce d'absorption d'énergie (3, 3.1) raccordée au tronçon de raccordement (5, 5.1), l'au moins un tronçon de raccordement (5, 5.1) présentant deux ailes (9, 9.1) placées en direction de la pièce d'absorption d'énergie (3, 3.1) faisant office d'encadrement pour le tronçon d'extrémité de la pièce d'absorption d'énergie (3, 3.1) à raccorder au support transversal de pare-chocs (2), sur lesquelles ailes (9, 9.1) la pièce d'absorption d'énergie (3, 3.1) est en appui par sa face extérieure et auxquelles ailes (9, 9.1) la pièce d'absorption d'énergie (3, 3.1) est raccordée, la surface profilée de tête de la pièce d'absorption d'énergie (3, 3.1) orientée vers le support transversal de pare-chocs (2) étant plane et un évidement (11, 11.1) étant prévu entre les ailes (9, 9.1) formant l'encadrement pour la pièce d'absorption d'énergie (3, 3.1) et une plaque d'appui (7) voisine disposée dans l'au moins un tronçon de raccordement (5, 5.1) du support transversal de pare-chocs (2) contre laquelle la surface profilée de tête de la pièce d'absorption d'énergie (3, 3.1) est en appui, lequel évidement (11, 11.1) s'étend sur la largeur de la plaque d'appui (7) et, par un tronçon, autour des exécutions d'angle de la plaque d'appui (7) limitant la largeur, **caractérisé en ce que** l'intervalle entre les surfaces se mettant en appui sur la pièce d'absorption d'énergie (3, 3.1) de l'encadrement du support transversal de pare-chocs (2) formant le logement de la pièce d'absorption d'énergie (8) est plus petit ou identique à l'étendue de la plaque d'appui (7) dans le sens z (sens vertical) et que la surface profilée de tête de la pièce d'absorption d'énergie (3, 3.1) est par conséquent couverte sur toute la surface par la plaque d'appui (7).

2. Module de support transversal de pare-chocs selon la revendication 1, **caractérisé en ce que** le bord supérieur et inférieur de la plaque d'appui (7) du support transversal de pare-chocs (2) avec les faces supérieures orientées à l'opposé de la pièce d'absorption d'énergie (3, 3.1) maintenue dans le logement (8) sont alignés ou sensiblement alignés avec les surfaces orientées vers l'extérieur des ailes (9,9.1).

3. Module de support transversal de pare-chocs selon la revendication 1 ou 2, **caractérisé en ce que** le support transversal de pare-chocs (2) est une pièce en tôle d'acier emboutie, dans laquelle a été réalisée respectivement une coupe ou une fente avant le processus d'emboutissage, afin de former les évidements (11, 11.1) dans l'au moins un tronçon de raccordement (5, 5.1) dans les zones constituant les évidements (11, 11.1) après le processus de mise en forme.

4. Module de support transversal de pare-chocs selon l'une des revendications 1 à 3, **caractérisé en ce que** le support transversal de pare-chocs (2) présente deux tronçons de raccordement (5, 5.1) auxquels est respectivement raccordée une pièce d'absorption d'énergie (3, 3.1).

5. Module de support transversal de pare-chocs selon l'une des revendications 1 à 4, **caractérisé en ce que** la pièce d'absorption d'énergie (3, 3.1) est raccordée mécaniquement aux ailes (9, 9.1) du tronçon de raccordement (5, 5.1) du support transversal de pare-chocs (2).

6. Module de support transversal de pare-chocs selon l'une des revendications 1 à 4, **caractérisé en ce que** la pièce d'absorption d'énergie (3, 3.1) est raccordée par assemblage mécanique ou par une soudure au tronçon de raccordement (5, 5.1) du support transversal de pare-chocs (2).

7. Procédé pour fabriquer un module de support transversal de pare-chocs selon l'une des revendications 1 à 6, **caractérisé en ce que** le support transversal de pare-chocs (2) est usiné à partir d'une pièce en tôle d'acier et mis dans sa forme profilée, une coupe ou une fente étant faite, avant le processus de mise en forme, dans la platine de tôle aux endroits où doivent être localisés les évidements (11, 11.1) après la mise en forme, à la suite de quoi la zone d'extrémité supérieure et inférieure de la plaque d'appui (7) est découplée des zones de platine voisines pour le processus de mise en forme.
